# EUROPÄISCHE PATENTANMELDUNG

(11) **EP 1 199 481 A1**
(43) Veröffentlichungstag der Anmeldung: **24.04.2002**
(21) Anmeldenummer: 00810949.8
(22) Anmeldetag: 16.10.2000
(51) Int. Cl.: F16B 7/18

(54) **Querverbindung von Profilstäben**

(71) Anmelder: Zihlmann Engineering, 5436 Würenlos (CH)
(72) Erfinder: Zihlmann, Monika, 5436 Würenlos (CH)
(74) Vertreter: Patentanwälte Breiter + Wiedmer AG

(57) **Zusammenfassung**

Eine Querverbindung von zwei in einem Winkel (α) aufeinanderstossenden, mit hinterschnittenen Längsnuten (20,21) versehenen Profilstäben (10,12), weist eine an ihrem einen Ende einen Kopf (48) aufweisende Verbindungsschraube (30) auf. Diese ist parallel zur Symmetrieachse eines längslaufenden Profilstabes (10) in einer hinterschnittenen Längsnut (20) desselben angeordnet, greift mit ihrem anderen Ende in einen in einer hinterschnittenen Längsnut (21) des quer verlaufenden Profilstabes (12) angeordneten Nutenstein (34) ein und hintergreift mit ihrem Kopf (48) ein eine Durchtrittsöffnung (26) für die Verbindungsschraube (30) aufweisendes, in die hinterschnittene Längsnut (20) eingesetztes Spreizelement. Durch Einwirkung einer durch die Verbindungsschraube (30) erzeugbaren Axialkraft ist das Spreizelement quer zur Längsnut (20) spreizbar und in dieser als Widerlager festklemmbar. Das Spreizelement umfasst einen Spreizkörper (24) mit in einem Winkel von weniger als 90° zur Längsrichtung (x) des Spreizkörpers (24) bzw. der Verbindungsschraube (30) nach aussen und in Richtung des Nutensteines (32) abragenden, von einander beabstandeten Spreizlappen (44), wobei der Kopf (48) der Verbindungsschraube (30) einer Stirnseite (46) des Spreizkörpers (24) anliegt.

## Beschreibung

Die Erfindung betrifft eine Querverbindung von zwei in einem Winkel aufeinanderstossenden, mit hinterschnittenen Längsnuten versehenen Profilstäben, mit einer an ihrem einen Ende einen Kopf aufweisenden Verbindungsschraube, die parallel zur Symmetrieachse eines längslaufenden Profilstabes in einer hinterschnittenen Längsnut desselben angeordnet ist, mit ihrem andern Ende in einen in einer hinterschnittenen Längsnut des quer verlaufenden Profilstabes angeordneten Nutenstein eingreift und mit ihrem Kopf eine Durchtrittsöffnung für die Verbindungsschraube aufweisendes, in die hinterschnittene Längsnut eingesetztes Spreizelement hintergreift, wobei das Spreizelement durch Einwirkung einer durch die Verbindungsschraube erzeugbaren Axialkraft quer zur Längsnut spreizbar und in dieser als Widerlager festklemmbar ist.

Aus der DE-A 3438773 ist eine Querverbindung von zwei rechtwinklig aneinanderstossenden, mit hinterschnittenen Längsnuten versehenen Profilstäben mit einer Verbindungsschraube bekannt. Die Verbindungsschraube ist parallel zur Symmetrieachse eines längslaufenden Profilstabes in einer hinterschnittenen Längsnut desselben angeordnet und greift mit ihrem dem Schraubenkopf abgewandten Ende in einen in einer hinterschnittenen Längsnut des quer verlaufenden Profilstabes angeordneten Nutenstein ein. Mit ihrem Kopf hintergreift die Verbindungsschraube ein zylindrisches Widerlagerstück, das in die hinterschnittene Längsnut des Profilstabes axial unverschieblich eingebaut ist und eine Durchtrittsbohrung für die Verbindungsschraube aufweist. Für den Zusammenbau ist es erforderlich, in dem anzuschliessenden Profilstab zylindrische Ausnehmungen quer zu seiner Längserstreckung herzustellen, um das zylindrische Widerlagerstück unterbringen zu können. Darüber hinaus ist durch das erkennbare zylindrische Widerlagerstück stets eine Befestigungsstelle markiert. Letztlich kann ein einmal mit zylindrischen Querbohrungen versehener Profilstab nicht mehr universell wiederverwendet werden, weil die Querbohrungen stets erkennbar bleiben.

Die DE-A- 4016320 offenbart eine Querverbindung von Profilstäben, die auf der in der DE-A-3438773 beschriebenen Querverbindung mit einem in die Längsnut einsetzbaren zylindrischen Widerlagerstück aufbaut. Der Aussendurchmesser des zylindrischen Widerlagerstückes ist dem Querschnitt der hinterschnittenen Längsnut des Profilstabes so angepasst, dass ein auf dem Aussenumfang des zylindrischen Widerlagerstückes angebrachtes Gewinde als ein in den Werkstoff des Profilstabes eingreifendes, selbstschneidendes Gewinde wirkt. Bei dieser Querverbindung können die zylindrischen Ausnehmungen an den Längsseiten des anzuschliessenden Profilstabes entfallen. Ein wesentlicher Nachteil der Querverbindung mit einem Widerlagerstück mit selbstschneidendem Gewinde liegt jedoch darin, dass das Einsetzen der Widerlagerstücke wegen des zu schneidenden Gewindes einen hohen Kraftaufwand erfordert, der rasch zu einer Ermüdung und zu Schmerzen im Handgelenk eines Monteurs führt, der nacheinander mehrere Querverbindungen herstellt.

Aus der DE-A-4343381 ist ein Verbindungselement zur Herstellung einer Querverbindung von Profilstäben der eingangs genannten Art mit einem Spreizelement bekannt. Das Spreizelement besteht aus zwei Spreizteilen, die mit jeweils einer schräg zur Längsachse der Verbindungsschraube in einem Winkel von 45° verlaufenden Keilflächen aufeinander stehen. Ein wesentlicher Nachteil dieser Verbindungsart liegt darin, dass durch die asymmetrische Spreizung lokal unterschiedliche Anpresskräfte zwischen Spreizkörper und Längsnut erzeugt werden, was insgesamt zur einer unzureichenden Fixierung des Spreizkörpers in der Längsnut führt.

Der Erfindung liegt daher die Aufgabe zugrunde, eine Querverbindung der eingangs genannten Art zu schaffen, mit der mit einfachen Mitteln eine gute Klemmwirkung erreicht werden kann.

Zur erfindungsgemässen Lösung der Aufgabe führt, dass das Spreizelement einen Spreizkörper mit in einem Winkel von weniger als 90° zur Längsrichtung des Spreizkörpers bzw. der Verbindungsschraube nach aussen und in Richtung des Nutensteines abragenden, von einander beabstandeten Spreizlappen umfasst, wobei der Kopf der Verbindungsschraube einer Stirnseite des Spreizkörpers anliegt.

Mit der Anordnung von federnden bzw. elastischen Spreizlappen wird eine gleichmässig über die Oberfläche des Spreizkörpers verteilte Krafteinwirkung erzeugt, die selbst bei geringen Anzugsmomenten der Verbindungsschraube zu einer ausgezeichneten Verklemmung des als Widerlager dienenden Spreizkörpers in der Längsnut führt.

Der Spreizkörper kann einstückig ausgebildet sein. Eine besonders bevorzugte und zweckmässige Ausbildung eines Spreizkörpers besteht darin, diesen als Paket aus einzelnen, in seiner Längsrichtung aneinandergereihten Einzelteilen durch Stanzpaketieren zu fertigen. Bei dieser letztgenannten Variante wird die äussere Formgebung des Spreizkörpers und das Anbringen der Durchtrittsbohrung wesentlich vereinfacht, da die spanabhebende Bearbeitung zur Herstellung eines Spreizkörpers mit vorgegebenem Querschnitt insbesondere aus einem Rohling aus einem harten Werkstoff zeitaufwendiger und auch teurer ist als das Ausstanzen und Paketieren einzelner Segmente. Die Einzelteile des Spreizkörpers bestehen aus Spreizelementen und Distanzelementen, die zur Beabstandung der Spreizlappen zwischen den Spreizelementen angeordnet sind.

Die Spreizelemente weisen zweckmässigerweise eine Basisfläche mit gegenüber deren Ebene abgewinkelten Spreizlappen auf. Die Distanzelemente entsprechen hierbei der Basisfläche der Spreizelemente.

Bevorzugt sind wenigstens die Spreizelemente aus Federstahl gefertigt. Da der Spreizkörper stanzpaketiert wird, ist es von Vorteil, wenn die Distanzelemente ebenfalls aus Federstahl gefertigt sind.

Bevorzugt sind die Profilstäbe aus Aluminium oder aus einer Aluminiumlegierung hergestellt.

Die Spreizlappen bzw. die Spreizelemente und die Distanzelemente weisen allgemein eine Dicke von etwa 0,3 bis 0,8 mm auf.

Der Querschnitt des Spreizkörpers ist im wesentlichen dem Querschnitt der Längsnut des Profilstabes nachgebildet, wobei die Spreizlappen so dimensioniert sind, dass sie nach dem Einsetzen des Spreizkörpers in die Längsnut der Innenwand der Längsnut federnd anliegen. Dadurch ergibt sich eine Vorspannung der Spreizlappen, so dass deren Kanten bereits leicht in die Oberfläche der Innenwand der Längsnut eindringen. Dieser Effekt wird beim Anziehen der Verbindungsschraube verstärkt, da die Spreizlappen nicht mehr an der Innenwand der Längsnut gleiten können, sondern durch Verkleinerung der Abwinklung zu einer Spreizung des Spreizkörpers führen, wodurch die Kanten der Spreizlappen weiter in die Oberfläche der Innenwand der Längsnut eindringen. Dadurch verkrallt sich der Spreizkörper praktisch über dessen gesamte Länge mit der Innenwand der Längsnut.

Der Winkel zwischen den Spreizlappen und der Ebene senktrecht zur Längsrichtung des Spreizkörpers bzw. der Basisfläche der Spreizelemente beträgt im unbelasteten Zustand etwa 15° bis 45°, vorzugsweise etwa 25° bis 35°.

Die erfindungsgemässe Querverbindung wird bevorzugt bei Konstruktionen mit Profilstäben aus Aluminium oder aus einem anderen Leichtmetall eingesetzt.

Der Spreizkörper bzw. die Spreiz- und Distanzelemente sind bevorzugt aus gehärtetem Federstahl gefertigt. Bei dieser Materialkombination ergeben sich äusserst kraftschlüssige, verdrehfeste und stabile Querverbindungen. Selbstverständlich können jedoch bei der erfindungsgemässen Querverbindung auch andere Materialien für die Profilstäbe und für den Spreizkörper bzw. dessen Einzelteile verwendet werden, wie z.B. Kunststoffe oder Kunststoff/Metall-Verbundmaterialien.

Die erfindungsgemässen Querverbindungen sind insbesondere geeignet für den einfachen Aufbau von Maschinengestellen, Arbeitstischen, Transportlinien und dgl. aus einzelnen aufeinanderstossenden Profilstäben zusammengesetzten Konstruktionen, die durch verdeckt angeordnete Verbindungsschrauben zusammengehalten werden.

Weitere Vorteile, Merkmale und Einzelheiten der Erfindung ergeben sich aus der nachfolgenden Beschreibung bevorzugter Ausführungsbeispiele sowie anhand der Zeichnung; diese zeigt schematisch in
- Fig. 1 eine Schrägsicht auf eine Querverbindung von Profilstäben;
- Fig. 2 eine Schrägsicht auf die Querverbindung von Fig. 1 in teilweise geschnittener Ansicht;
- Fig. 3 eine Schrägsicht auf ein Verbindungselement mit einem stanzpaketierten Spreizkörper;
- Fig. 4 einen Schnitt durch und eine Draufsicht auf ein Spreizelement des Spreizkörpers von Fig. 3 mit aufliegendem Distanzelement;
- Fig. 5 einen Längsschnitt durch das in die Querverbindung von Fig. 1 eingesetzte Verbindungselement von Fig. 3;
- Fig. 6 einen vergrösserten Ausschnitt von Fig. 5.

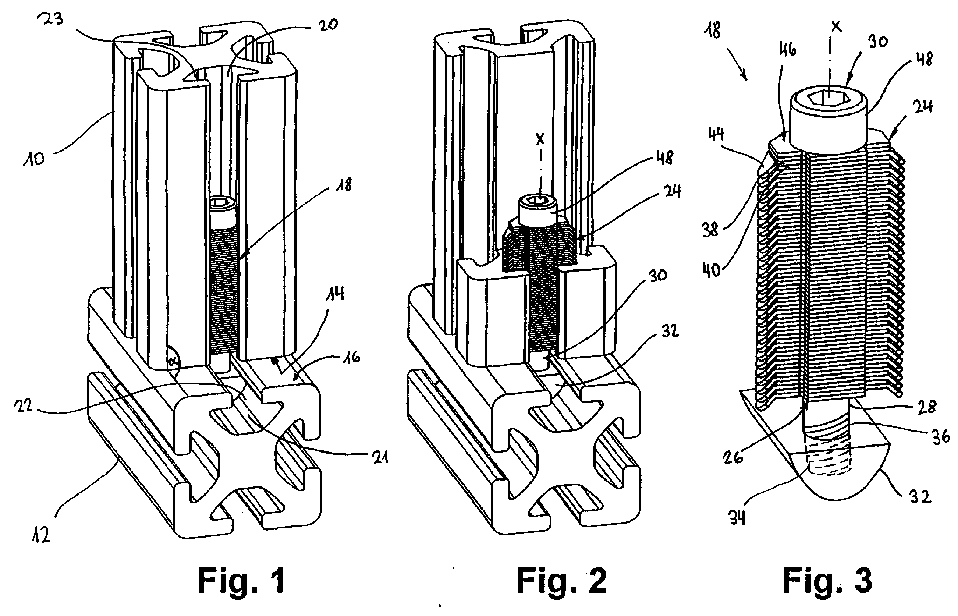

Eine in den Fig. 1 und 2 dargestellte Anordnung umfasst zwei quer zueinander verlaufende, in einem Winkel α von 90° aufeinander stossende Profilstäbe 10, 12. Hierbei liegt eine Stirnseite 14 des Profilstabes 10 einer Aussenfläche 16 des quer zum ersten Profilstab verlaufenden zweiten Profilstabes 12 an. Die beiden Profilstäbe 10, 12 sind über ein in Fig. 3 dargestelltes, aus drei Bauteilen bestehendes Verbindungselement 18 kraftschlüssig und verdrehfest miteinander verbunden. Die Profilstäbe 10, 12 sind beispielsweise durch Strangpressen aus einer Aluminiumlegierung gefertigt.

Die Profilstäbe 10, 12 weisen hinterschnittene Längsnuten 20, 21 von querschnittlich etwa pilzkopfförmiger Gestalt mit zur Profilaussenfläche 16 gerichteten Öffnungsschlitzen 22 auf. Selbstverständlich können die Profile 10, 12 sowie die hinterschnittenen Längsnuten 20, 21 auch andere als die in der Zeichnung dargestellten Querschnittsformen haben. Ebenso können die Profilstäbe 10, 12 in einem von 90° abweichenden Winkel α aufeinander stossen. Der Vorteil gleicher Querschnittsformen der Längsnuten 20, 21 bei gleichen oder unterschiedlichen Profilstabquerschnitten liegt darin, dass die Verbindungselemente 18 einheitlich aus identischen Einzelteilen zusammengebaut werden können.

Gemäss Fig. 3 setzt sich das Verbindungselement 18 zusammen aus einem Spreizkörper 24 mit axialer Durchtrittsöffnung 26 für einen den Spreizkörper 24 in dessen Längs- bzw. Achsenrichtung x durchdringenden Schaft 28 einer Verbindungsschraube 30 und einem Nutenstein 32 mit einer Gewindebohrung 34 für den Eingriff mit dem endständig am Schaft 28 der Verbindungsschraube 30 angeordneten Schraubengewinde 36.

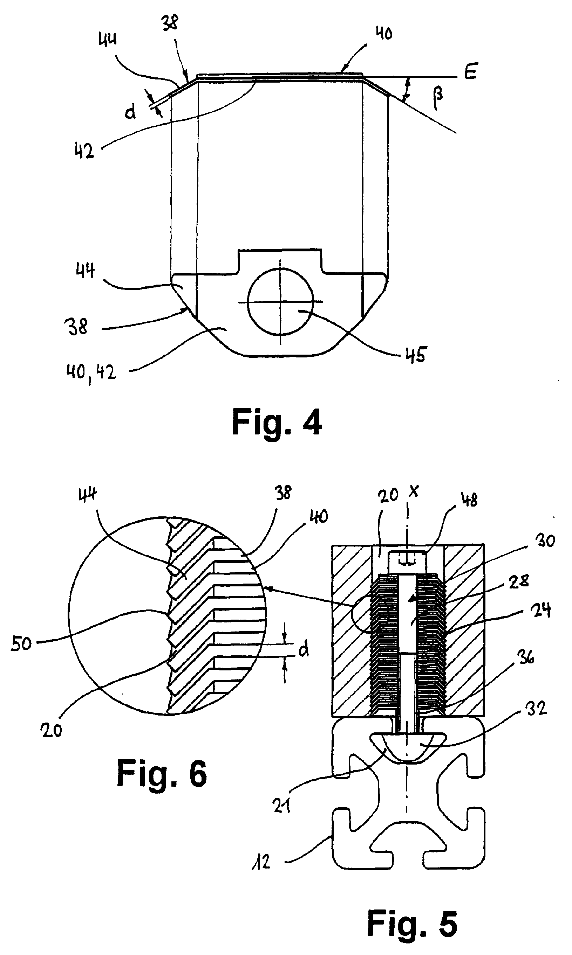

Wie aus den Fig. 3 und 4 ersichtlich, ist der Spreizkörper 24 als Paket aus einzelnen, in seiner Längsrichtung x einander flächig anliegenden Spreizelementen 38 mit zwischenliegenden Distanzelementen 40 gefertigt. Die Dicke d der einzelnen Spreizelemente 38 und Distanzelemente 40 beträgt beispielsweise 0,5 mm, wobei als Werkstoff bevorzugt Federstahl eingesetzt wird. Die Spreiz- und Distanzelemente 38, 40 werden in bekannter Weise durch Stanzpaketieren zum Spreizkörper 24 zusammengesetzt.

Der Querschnitt des Spreizkörpers 24 bzw. die Draufsicht- oder Grundrissfläche der einzelnen Spreizelemente 38 entspricht im wesentlichen dem Querschnitt der hinterschnittenen Längsnut 20 des Profilstabs 10. Die in die seitlichen Hinterschneidungsbereiche 23 einragenden Teile der einzelnen Spreizelemente 38 sind als Spreizlappen 44 gegenüber einer Basisfläche 42 um einen Winkel β von beispielsweise 30° in Richtung auf den Nutenstein 32 abgewinkelt. Die zwischen den Spreizelementen 38 angeordneten Distanzelemente 40 sind eben ausgebildet und ihre Draufsicht- oder Grundrissfläche entspricht der Basisfläche 42 der Spreizelemente 38. Eine zentrale Öffnung 45 in den Spreizelementen 38 und Distanzelementen 40 ergibt im zusammengebauten Spreizkörper 24 die axiale Durchtrittsöffnung 26.

Durch die wechselseitige Anordnung von Spreizelementen 38 und Distanzelementen 40 im stanzpaketierten Spreizkörper 24 ergibt sich somit in Längsrichtung x des Spreizkörpers eine Anordnung mit beidseitig zum Einsetzen in die Hinterschneidungsbereiche 23 der Längsnut 20 angeordneten, gegen den Nutenstein 32 abgewinkelten und voneinander beabstandeten Spreizlappen 44.

Die Draufsicht- oder Grundrissfläche des Spreizkörpers 24 bzw. der einzelnen Spreizelemente 38 ist bezüglich der von der Basisfläche 42 abstehenden Spreizlappen 44 gegenüber den entsprechenden seitlichen Hinterschneidungsbereichen 23 der Längsnut 20 geringfügig grösser dimensioniert, so dass die Spreizlappen 44 beim Einschieben des Spreizkörpers 24 in die Längsnut 22 des Profilstabes 10 aus der abgewinkelten Lage im unbelasteten Zustand um etwa 5 bis 10° weiter umgebogen werden, so dass der Spreizkörper 24 schon nach dem Einsetzen in die Längsnut 20 selbsttätig gehalten wird.

Beim Zusammenbau der Profilstäbe 10, 12 werden die in Fig. 3 dargestellten Einzelteile des Verbindungselementes 18, d.h. die Verbindungsschraube 30, das Spreizelement 24 und der Nutenstein 32, vormontiert, wobei darauf geachtet wird, dass die Verbindungsschraube 30 ohne Krafteinwirkung auf den Spreizkörper 24 mit dem Nutenstein 32 verschraubt ist. Der Spreizkörper 24 wird sodann von der Stirnseite 14 des Profilstabes 10 in dessen Längsnut 20 eingeführt. Anschliessend wird der von der Stirnseite des Profilstabes 10 abragende Nutenstein 32 stimseitig in die Längsnut 21 des quer zum Profilstab 10 zu montierenden Profilstabes 12 eingeführt und an die für den Zusammenbau vorgesehene Position verschoben. Anschliessend wird die Verbindungsschraube 30 mit Hilfe eines Inbus-Schlüssels oder -Schraubenziehers angezogen, wobei das Schraubengewinde 36 weiter in die Gewindebohrung 34 des Nutensteines 32 eindringt. Der auf einer Stirnseite 46 des Spreizkörpers 24 aufliegende Kopf 48 der Verbindungsschraube 30 schiebt durch die Schraubbewegung den gesamten Spreizkörper 24 in Richtung gegen den Nutenstein 32. Dadurch verstärkt sich die auf die einzelnen Spreizlappen 44 in Gegenrichtung der Schraubbewegung wirkende Kraft, wodurch sich die Abwinklung der Spreizlappen 44 vermindert und die Anpresskraft der Spreizlappen 44 auf die Innenwand der Längsnut 20 erhöht wird. Insgesamt dehnt sich bei diesem Vorgang der Spreizkörper 24 in Richtung der Spreizlappen 44 aus, wobei deren Enden teilweise in die Innenwand der Längsnut 20 eindringen.

Wie in den Fig. 5 und 6 dargestellt, wirken die Kanten 50 der umgebogenen Spreizlappen 44 wie Zähne mit entgegen der Schraubrichtung gerichteten Spitzen, so dass sich insgesamt eine Verkrallung im Sinne von Widerhaken ergibt, was insbesondere dann zu einer besonders guten form- und kraftschlüssigen Verbindung führt, wenn die Profilstäbe aus Aluminium und die Spreizlappen 44 bzw. die Spreizelemente 38 aus gehärtetem Federstahl sind.

Eine ausreichende Klemmwirkung des Spreizkörpers 24 wird etwa dann erreicht, wenn der Spreizkörper 24 nach dem Zusammenbau der beiden Profilstäbe 10, 12 durch Drehen der Verbindungsschraube 30 um etwa 1 bis 2 mm in Schraubrichtung bewegt wird.

## Patentansprüche

1. Querverbindung von zwei in einem Winkel (α) aufeinanderstossenden, mit hinterschnittenen Längsnuten (20,21) versehenen Profilstäben (10,12), mit einer an ihrem einen Ende einen Kopf (48) aufweisenden Verbindungsschraube (30), die parallel zur Symmetrieachse eines längslaufenden Profilstabes (10) in einer hinterschnittenen Längsnut (20) desselben angeordnet ist, mit ihrem anderen Ende in einen in einer hinterschnittenen Längsnut (21) des quer verlaufenden Profilstabes (12) angeordneten Nutenstein (32) eingreift und mit ihrem Kopf (48) ein eine Durchtrittsöffnung (26) für die Verbindungsschraube (30) aufweisendes, in die hinterschnittene Längsnut (20) eingesetztes Spreizelement hintergreift, wobei das Spreizelement durch Einwirkung einer durch die Verbindungsschraube (30) erzeugbaren Axialkraft quer zur Längsnut (20) spreizbar und in dieser als Widerlager festklemmbar ist,
**dadurch gekennzeichnet, dass**
das Spreizelement einen Spreizkörper (24) mit in einem Winkel von weniger als 90° zur Längsrichtung (x) des Spreizkörpers (24) bzw. der Verbindungsschraube (30) nach aussen und in Richtung des Nutensteines (32) abragenden, von einander beabstandeten Spreizlappen (44) umfasst, wobei der Kopf (48) der Verbindungsschraube (30) einer Stirnseite (46) des Spreizkörpers (24) anliegt.

2. Querverbindung nach Anspruch 1, **dadurch gekennzeichnet, dass** der Spreizkörper (24) als Paket aus in seiner Längsrichtung (x) aneinander gereihten Spreizelementen (38) mit zwischen den Spreizelementen (38) angeordneten Distanzelementen (40) durch Stanzpaketieren gefertigt ist.

3. Querverbindung nach Anspruch 2, **dadurch gekennzeichnet, dass** die Spreizelemente (38) eine Basisfläche (42) mit gegenüber deren Ebene (E) abgewinkelten Spreizlappen (44) aufweisen.

4. Querverbindung nach Anspruch 3, **dadurch gekennzeichnet, dass** die Distanzelemente (40) der Basisfläche (42) der Spreizelemente (38) entsprechen.

5. Querverbindung nach einem der Ansprüche 2 bis 4, **dadurch gekennzeichnet, dass** wenigstens die Spreizelemente (24) aus Federstahl gefertigt sind.

6. Querverbindung nach einem der Ansprüche 1 bis 5, **dadurch gekennzeichnet, dass** die Profilstäbe (10,12) aus Aluminium oder aus einer Aluminiumlegierung hergestellt sind.

7. Querverbindung nach einem der Ansprüche 1 bis 6, **dadurch gekennzeichnet, dass** die Spreizlappen (44) bzw. die Spreizelemente (38) und die Distanzelemente (40) eine Dicke (d) von etwa 0,3 bis 0,8 mm aufweisen.

8. Querverbindung nach einem der Ansprüche 1 bis 7, **dadurch gekennzeichnet, dass** der Querschnitt des Spreizkörpers (24) im wesentlichen dem Querschnitt der Längsnut (20) des Profilstabes (10) nachgebildet ist.

9. Querverbindung nach Anspruch 8, **dadurch gekennzeichnet, dass** die Spreizlappen (44) so dimensioniert sind, dass sie nach dem Einsetzen des Spreizkörpers (24) in die Längsnut (20) der Innenwand der Längsnut (20) federnd anliegen.

10. Querverbindung nach einem der Ansprüche 1 bis 9, **dadurch gekennzeichnet, dass** der Winkel (β) zwischen den Spreizlappen (44) und der Ebene (E) senkrecht zur Längsrichtung (x) des Spreizkörpers (24) bzw. der Basisfläche (42) der Spreizelemente (38) im unbelasteten Zustand etwa 15° bis 45°, vorzugsweise etwa 25 bis 35° beträgt.
